# EUROPEAN PATENT APPLICATION

(11) **EP 4 036 881 A1**
(43) Date of publication of application: **03.08.2022**
(21) Application number: 21217356.1
(22) Date of filing: 23.12.2021
(51) Int. Cl.: G07G 1/00, G06Q 20/18, G06Q 20/20

(54) **MULTIMEDIA KIOSK FOR PURCHASING PRODUCTS**

(30) Priority: 28.01.2021 IT 202100001712
(71) Applicant: Cashops S.r.l., 42124 Reggio Emilia (IT)
(72) Inventor: VISENTINI, Gianfranco, 40017 San Giovanni in Persiceto (BO) (IT)
(74) Representative: Corradini, Corrado

(57) **Abstract**

A multimedia kiosk (10) for purchasing products is described as comprising:
- at least a support (15) provided with an area (20) for loading the products to be purchased;
- an interface module (30) associated to the support (15);
- at least a payment module (40) associated to the support (15);
- a vision module (50) configured to detect an image of the loading area (20); and
- at least an electronic control unit (55) operatively connected to the vision module (50), the payment module (40) and the interface module (30), wherein the electronic control unit (55), is set up for:
o acquiring the image of the loading area (20) detected by the vision device;
o recognising the products present in the acquired image;
o associating to each recognised product a relative predetermined cost;
o transmitting information to the interface module (30), wherein the information transmitted contains at least an identification of each product and the cost thereof and at least a total cost that is the sum of each cost associated to the respective recognised product, the interface module (30) being configured so that such information is perceivable by a user of the multimedia kiosk (10); and
o activating the payment module (40) to enable receiving a payment for the total cost.

## Description

### TECHNICAL FIELD

The present invention relates to the field of marketing and selling products.

In particular, the present invention relates to an automatic payment method and a multimedia kiosk for (automatically) purchasing products that is configured to perform the method.

### PRIOR ART

They are known multimedia kiosks for purchasing products which generally comprise a support frame that makes available an area for loading the products to be purchased, an interface module associated with the support through which the user is notified of the list of products being purchased and their cost, a barcode or similar coding reader module and a payment module.

As known, when using the multimedia purchasing kiosk, the user first arranges the products to be purchased at the loading area and then manually passes them one by one by facing the barcode imprinted on the product on the reader module in order to register it for purchase.

A need perceived in the sector is to make purchase and payment operations at the multimedia kiosks faster, simpler and more secure, so that automatic payment is convenient, fast and intuitive for any person.

An object of the present invention is to meet such needs of the prior art by making available an automatic cash desk that allows for quick, simple and secure purchase and payment of products, as well as improves the automation and speed of the process. Another object is to achieve such an objective within the framework of a simple and rational solution.

Such an object is achieved by the features of the invention reported in the independent claims. The dependent claims outline preferred and/or particularly advantageous aspects of the invention.

### DISCLOSURE OF THE INVENTION

The invention, in particular, makes available a multimedia kiosk for purchasing products which comprises:
- at least a support provided with an area for loading the products to be purchased;
- an interface module associated to the support;
- at least a payment module associated to the support;
- a vision module configured to detect an image of the loading area; and
- at least an electronic control unit operatively connected to the vision module, the payment module and the interface module, wherein the electronic control unit is set up for:
   ∘ acquiring the image of the loading area detected by the vision device;
   ∘ recognising the products present in the acquired image;
   ∘ associating to each recognised product a relative predetermined cost;
   ∘ transmitting information to the interface module, wherein the information transmitted contains at least an identification of each product and the cost thereof and at least a total cost that is the sum of each cost associated to the respective recognised product, the interface module being configured so that such information is perceivable by a user of the multimedia kiosk; and
   ∘ activating the payment module to enable receiving a (physical or electronic) payment of the total cost.

Thanks to this solution, the invention makes available a multimedia kiosk that allows to purchase and pay for products in a particularly simple way for the user, as well as in a particularly fast and safe way compared to multimedia kiosks of the prior art, and that allows a high degree of automation and speed of the process, thanks to the Artificial Intelligence system by which the electronic control unit is programmed.

In fact, thanks to the vision module and the electronic control unit, all the products arranged in the loading area will be recognised, with no need to be moved or arranged in a specific orientation or even to be prearranged one at a time, and therefore, fully automatically registered with no need for the user to interact with the products.

In addition, thanks to the multimedia kiosk solution, a particularly inclusive system for purchasing and paying for products, even for people with disabilities, is made available. Another aspect of the invention provides that the multimedia kiosk may comprise a tray configured to be placed in the loading area and to hold the products to be purchased. Thanks to this solution, the tray is configured to delimit the area in which the products are to be arranged so that they are all available to the vision module for properly displaying and identifying them.

Another aspect of the invention provides that the support may comprise a sanitising device configured to sanitise at least one of the loading area, the interface module and the tray.

Thanks to this solution, the multimedia kiosk is provided with a device capable of killing and/or preventing the replication of pathogens, such as viruses and/or bacteria and/or spores, which could be transferred from one user to another of the automatic cash desk. A further aspect of the invention provides that the payment module may comprise a payment terminal or multiple payment terminals (separate or integrated) for receiving a payment by means of at least one of cash money, payment cards and contactless payment systems.

Thanks to this solution, the multimedia kiosk is configured to offer the user a wide range of payment options.

Furthermore, a further aspect of the invention provides that the multimedia kiosk may comprise a sanitising device associated with at least one payment terminal for sanitising cash money and/or payment cards.

Thanks to this solution, the multimedia kiosk is configured to sanitise the payment card and/or cash money it receives as input, preventing them from acting as a vehicle for pathogens that could harm the user.

Thereby, all cash money (or payment cards) introduced into the payment terminal are sanitised and can be returned to the users (e.g. as change) in complete safety for them. A further aspect of the invention provides that the vision module may comprise at least one video camera or camera.

Thanks to this solution, the image of the products arranged in the loading area is obtained by means of a particularly reliable solution.

Still another aspect of the invention provides that the electronic control unit for recognising the products present in the image acquired may be programmed by means of an Artificial Intelligence algorithm (preferably a machine learning or deep learning algorithm), for example such to enable automatic learning/recognition.

Thanks to this solution, the multimedia kiosk is particularly versatile in being able to be programmed and/or updated in a simple and effective manner to recognise, completely autonomously, the products that will then be made available to the public within the point of sale it is intended for.

The invention further makes available an automatic payment method for purchasing products which comprises:
∘ acquiring an image of a loading area of a support of a multimedia kiosk by means of a vision module;
∘ recognising the products present in the acquired image;
∘ associating to each recognised product a relative predetermined cost;
∘ transmitting information to an interface module of the multimedia kiosk, wherein the information transmitted contains at least an identification of each product and the cost thereof and at least a total cost that is the sum of each cost associated to the respective recognised product, so that such information is perceivable by a user of the multimedia kiosk; and
∘ activating a payment module of the multimedia kiosk to enable receiving a (physical or electronic) payment of the total cost.

Thanks to such a solution, the invention makes available an automatic payment method that allows products to be purchased particularly quickly and fully automatically without the need for the user to interact/manipulate the products.

### BRIEF DESCRIPTION OF THE DRAWINGS

Further features and advantages of the invention will be more apparent after reading the following description provided by way of non-limiting example, with the aid of the accompanying drawings.

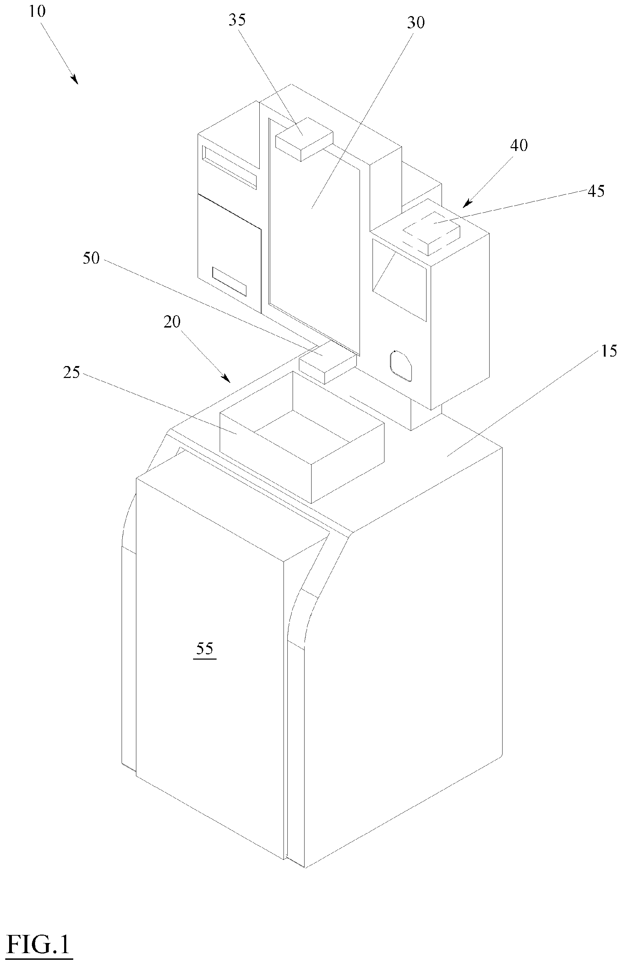

Figure 1 is a perspective schematic view of a multimedia kiosk according to the invention.

### DETAILED DESCRIPTION

With particular reference to the enclosed figure, 10 globally denotes a multimedia kiosk for purchasing products adapted to be placed inside a point of sale, such as for example a commodity (staple goods) shop, in order to allow customers of the point of sale to autonomously (i.e. without the need of assistance from the employees of the point of sale) purchase one or more products available inside the point of sale itself.

A multimedia kiosk 10 refers to a (stationary) terminal available for public use, where the operations of registering products and subsequent payment take place in the absence of a physical person acting as cashier.

The multimedia kiosk 10 firstly comprises at least one support 15, that is rigid (i.e. not deformable under traction and/or compression and/or torsion when subjected to the usual loads for which it is intended), which essentially defines the load-bearing frame of the multimedia kiosk 10.

The support 15 is, for example, fixed to the ground or a wall such to prevent it from being removed and/or tampered with.

The support 15 may be made in a single piece or consist of more parts, for example rigidly joined together.

For example, the support 15 may comprise a lower base, for example as a box-shaped body (which cannot be tampered with, but for example can be opened by means of a door provided with closing/safety devices), delimiting a volume for housing various components useful for the operation of the multimedia kiosk 10.

The support 15 may also have an upper column rising above the lower base adapted to support other elements useful for the operation of the multimedia kiosk 10.

The support 15 makes available a loading area 20 adapted to receive the one or more products selected by the user for purchase.

The loading area 20 can be defined by a stationary (horizontal) platform or a mobile support plane, such as a (belt) conveyor, trolley or similar.

The loading area 20, for example, is defined above the lower base of the support 15, e.g. at an outer (and horizontal) top wall thereof.

For example, the multimedia kiosk 10 may comprise a (movable) tray 25 capable of being arranged at the loading area 20 (i.e. resting thereon).

The tray 25 acts as a containment and/or support device, open at the top, for the products to be purchased, and delimits (at the bottom and/or on the sides) a (delimited) space for housing the products, so that they are placed within this housing space when they are placed at the loading area 20 housed resting on the tray 25.

The tray 25 could be, in a possible embodiment, any container adapted to define a compartment (open or closed) for housing one or more products.

The multimedia kiosk 10 further comprises an interface module 30 associated with the support 15 configured to emit signals perceptible to a user of the automatic cash desk 10, such as visual and/or audio signals or otherwise.

In particular, the interface module 30 may be configured to emit purchase-related signals such as, in particular, at least an identification of each product and the related cost and at least one total cost that is the sum of each cost associated to the respective recognised product

For example, the interface module 30 could comprise or consist of a monitor, possibly of the touch screen type, attached to the support 15 of the automatic cash desk 10, and be configured to emit signals (visual and/or audio) related to the purchase in the form of images, character strings and symbols that are displayed on the monitor.

The interface module 30 may further comprise a microphone and/or loudspeakers, e.g. integrated into the monitor or separate therefrom, and/or tactile devices for receiving and/or transmitting tactile signals or otherwise.

The interface module 30 is, for example, supported by the support 15, e.g. by the upper column thereof, so as to be accessible (and visible) to the user of the multimedia kiosk 10.

It is not excluded that the interface module 30 (i.e., the monitor thereof) may be configured to transmit images, such as live video images of what is captured by the vision module, described below, or other video cameras and/or advertising images or otherwise, for example when the multimedia kiosk 10 is not in use, or is in stand-by mode. The multimedia kiosk 10 may further comprise a sanitizing device 35 associated with the support 15 and configured to sanitize at least one of the loading area 20, the interface module 30 and the tray 25.

Preferably, the sanitizing device 35 may be configured to sanitize both the loading area 20 (and/or the empty tray 25 arranged therein) and the interface module 30, for example when these are not being used by a user.

The sanitizing device 35 may, for example, comprise one or more UV radiation sources, preferably UVC, which are constrained to the support 15 and configured to emit a directed beam of UV radiation that affects only an area of interest, for example exclusively the loading area 20 (and/or the empty tray 25 arranged therein) and/or the interface module 30.

UVC radiations refer to UV (ultraviolet) radiations characterized by a wavelength ranging between 100 nm and 280 nm.

Such UV radiations are particularly effective at killing viruses and/or bacteria and/or spores and/or preventing them from replicating.

Preferably such one or more UV radiation sources are of the LED (light emitting diode) type.

The multimedia kiosk 10 comprises, furthermore, at least one payment module 40 associated with the support 15, or attached thereto, to allow the user to pay, and possibly obtain change (where necessary), so as to define the actual purchase of the products. The payment module 40 is, for example, supported by the support 15, e.g. by the upper column thereof, so as to be accessible (and visible) by the user of the multimedia kiosk 10 and/or at least partially within the lower base.

In particular, the payment module 40 comprises at least one payment terminal (or more payment terminals separate from each other) for receiving a payment by at least one of cash money, payment cards and contactless payment systems.

Each payment terminal is in itself known to the person skilled in the art and therefore not described in detail.

The multimedia kiosk 10 may, in addition, comprise a sanitizing device 45 associated with one or more payment terminals of the payment module 40 for sanitizing cash money and/or payment cards inserted therein.

The sanitising device 45 can be integrated into the payment module 40, for example inside the payment terminal itself.

For example, the sanitizing device 45 may comprise a source of UV (ultraviolet) radiations, preferably UVC radiations.

Preferably such a UV radiation source is of the LED (light emitting diode) type. Alternatively, it may be provided that the sanitising device 45 may comprise an atomiser of a disinfectant solution.

The multimedia kiosk 10 further comprises a vision module 50 arranged and configured to frame the loading area 20 (e.g., from above), or the tray 25 possibly arranged therein (and the products contained therein), and to detect (continuously or on demand) an image of the loading area 20 itself, or of the tray 25 with the products inserted therein.

For example, the vision module 50 comprises at least one video camera (2D or 3D) or camera attached to the support 15 of the automatic cash desk 10.

The vision module 50 is, for example, supported by the support 15, e.g. by the upper column thereof, so as to frame the loading area 20.

The multimedia kiosk 10 further comprises at least one electronic control unit 55 provided with a storage unit (and a processor) and configured to control the operation of the multimedia kiosk 10 as will better appear below.

The electronic control unit 55 may be a single processor or may be divided into several processors (physically separate and) coordinated with each other.

For example, the electronic control unit 55 may comprise at least one "mini PC" and at least one "Jetson Nano".

In particular, the electronic control unit 55 is provided with a database (stored in the storage unit) containing or adapted to contain information about the products on sale within the point of sale for which the multimedia kiosk 10 is intended.

In particular, the database contains or can be compiled in such a way as to contain, for each product, at least an identification code or name, a relative purchase cost, and at least one product reference image (preferably a plurality of images).

The electronic control unit 55 is operatively connected to the vision module 50, the payment module 40 and the interface module 30, as well as possibly to the sanitizing device 35 and the sanitizing device 45 and possibly to any other module and/or sensor and/or device with which the multimedia totem 10 is equipped in order to control the operation of the multimedia kiosk 10 itself.

More in detail, the electronic control unit 55 is configured to acquire (continuously or upon command, for example upon a command received via the interface module 30) the image of the loading area 20 detected by the vision module 50, for example by the video camera or camera.

For example, (in the case of acquisition on command) the electronic control unit 55 could be configured to acquire the image detected by the vision module 50, only after receiving a wake up signal received via the interface module 30, for example after the user presses a button (which may be in the form of a graphic icon) specifically arranged in the interface module 30, once all the products of interest have been deposited in the loading area 20, or inside the tray 25 if there is one.

Alternatively, said wake up signal may be a voice command given by the user of the multimedia kiosk 10 via a microphone of the interface module 30.

The electronic control unit 55 is then configured to recognise the products present in the scanned image.

In particular, the electronic control unit 55 is configured to recognise the products present in the scanned image even in case of deformed products.

For example, a deformed product means a product with a shape other than the standard product, with differences smaller than a predetermined reference shape, i.e. contained within a predetermined deformation limit (and stored in the storage unit).

For example, the electronic control unit 55 may be configured to compare the image acquired by the vision module 50 with a plurality of product reference images stored in the storage unit.

Alternatively, the electronic control unit 55 may be configured to connect to the Internet (i.e., it may be provided with a WI-FI or WAN or LTE or other Internet connection module) and to compare the image acquired by the vision module 50 with a plurality of product reference images collected in suitable libraries available on an on-line site (e.g., a dedicated site).

For example, to recognise the products present in the acquired image, the electronic control unit 55 can be programmed by an Artificial Intelligence algorithm.

For example, the electronic control unit 55 may be programmed by a machine learning or deep learning algorithm.

More in detail, the electronic control unit 55 may be programmed, for example before the multimedia kiosk 10 is firstly used, by means of an initialisation (or learning) cycle. Such an initialisation or learning cycle may provide to arrange each product on sale one at a time (within the point of sale which the multimedia kiosk 10 is intended for) at the loading area 20, or within the tray 25.

For each product, the initialisation or learning cycle then provides that the electronic control unit 55 is adapted to activate the vision module 50 so as to acquire at least one product reference image.

This initialisation or learning cycle then provides to associate the acquired reference image with a (unique) product identification name or code and a respective purchase cost, e.g. by compiling, via the interface module 30, the specifically prepared compilation fields.

Such an initialisation cycle provides to store the acquired image and the associated name or identification code and related purchase price in the database in the storage unit of the electronic control unit 55.

In use, the electronic control unit 55 is, therefore, configured to associate each product recognised in the acquired image with the predetermined cost (stored in the storage unit).

The electronic control unit 55 is also configured to calculate a product total cost as the sum of the predetermined individual costs of the recognised products.

The electronic control unit 55 is, furthermore, configured to transmit to the interface module 30 information, which is subsequently switched, transmitted and emitted by the interface module 30 so as to be perceptible to the user of the multimedia kiosk 10, related to the products being purchased.

In particular, the electronic control unit 55 is configured to transmit information containing at least the identification code or name of each recognised product and the related cost (predetermined and pre-set in the storage unit), and at least said total cost calculated by the electronic control unit 55.

Where appropriate, this information may also include at least one reference image for each recognised product.

The electronic control unit 55 is, furthermore, configured to activate the payment module 40 to enable the receipt of a payment of the calculated total cost.

For example, the electronic control unit 55 may be configured to activate the payment module 40, only after receiving an activation signal received via the interface module 30, for example after the user presses (for confirmation) a further confirmation button (which may be in the form of a graphic icon) specifically arranged in the interface module 30.

Alternatively, said activation signal may be a voice command given by the user of the multimedia kiosk 10 via a microphone of the interface device 30.

The multimedia kiosk 10 may further comprise a temperature detecting device operatively connected to the electronic control unit 55.

The temperature detecting device is configured so as to detect the body temperature of the user of the automatic cash desk, preferably non-contact i.e. remaining at a non-zero distance from the user of the multimedia kiosk 10.

The invention further makes available an automatic payment method for purchasing products, comprising first of all acquiring an image of a loading area 20 of a support 15 of a multimedia kiosk 10, at which the articles selected to be purchased are arranged, by means of a vision module 50.

The method then provides to recognise the products present in the acquired image, for example by means of the Artificial Intelligence algorithm and/or by comparing said acquired image with a plurality of reference images each related to a specific product offered for sale.

The method then provides to associate each recognised product with a relative predetermined cost and calculate a total cost as the sum of each cost associated with the respective recognised product.

Still, the method provides to transmit information to an interface module 30 of the multimedia kiosk 10, wherein the transmitted information contains at least an identification of each product and the related cost and at least said calculated total cost, so that such information is perceptible by a user of the multimedia kiosk 10.

The method provides, then, to activate a payment module 40 of the multimedia kiosk 10 to enable receiving a payment of the total cost, for example by means of a payment module 40 of the multimedia kiosk 10 enabling payment by cash money and/or payment cards and/or contactless payment systems.

The invention thus conceived is susceptible to several modifications and variations, all falling within the scope of the inventive concept.

Moreover, all details can be replaced by other technically equivalent elements.

In practice, the materials used, as well as the contingent shapes and sizes, can be whatever according to the requirements without for this reason departing from the scope of protection of the following claims.

## Claims

1. A multimedia kiosk (10) for purchasing products which comprises:
- at least a support (15) provided with an area (20) for loading the products to be purchased;
- an interface module (30) associated to the support (15);
- at least a payment module (40) associated to the support (15);
- a vision module (50) configured to detect an image of the loading area (20); and
- at least an electronic control unit (55) operatively connected to the vision module (50), the payment module (40) and the interface module (30), wherein the electronic control unit (55), is set up for:
∘ acquiring the image of the loading area (20) detected by the vision device;
∘ recognising the products present in the acquired image;
∘ associating to each recognised product a relative predetermined cost;
∘ transmitting information to the interface module (30), wherein the information transmitted contains at least an identification of each product and the cost thereof and at least a total cost that is the sum of each cost associated to the respective recognised product, the interface module (30) being configured so that such information is perceivable by a user of the multimedia kiosk (10); and
∘ activating the payment module (40) to enable receiving a payment for the total cost.

2. The multimedia kiosk (10) according to claim 1, which comprises a tray (25) configured to be positioned in the loading area (20) and to contain the products to be purchased.

3. The multimedia kiosk (10) according to the preceding claim, comprising a sanitizing device (35) configured to sanitize at least one of the loading area (20), interface module (30) and tray (25).

4. The multimedia kiosk (10) according to claim 1, wherein the payment module (40) comprises a payment terminal for receiving a payment by means of at least one of cash, payment cards and contactless payment methods.

5. The multimedia kiosk (10) according to the preceding claim, comprising a sanitising device (45) associated to the payment terminal for sanitizing cash and/or payment cards.

6. The multimedia kiosk (10) according to claim 1, wherein the vision module (50) comprises at least a video camera or camera.

7. The multimedia kiosk (10) according to claim 1, wherein the electronic control unit (55) for recognising the products present in the acquired image is programmed by an Artificial Intelligence algorithm.

8. An automatic payment method for purchasing products which comprises:
∘ acquiring an image of a loading area (20) of a support (15) of a multimedia kiosk (10) by a vision module (50);
∘ recognising the products present in the acquired image;
∘ associating to each recognised product a relative predetermined cost;
∘ transmitting information to an interface module (30) of the multimedia kiosk (10), wherein the information transmitted contains at least an identification of each product and the cost thereof and at least a total cost that is the sum of each cost associated to the respective recognised product, so that such information is perceivable by a user of the multimedia kiosk (10); and
∘ activating a payment module (40) of the multimedia kiosk (10) to enable receiving a payment for the total cost.
